# FASCICULE DE BREVET EUROPEEN

(11) **EP 3 353 597 B1**
(45) Date de publication et mention de la délivrance du brevet: **13.12.2023**
(21) Numéro de dépôt: 16775805.1
(22) Date de dépôt: 08.09.2016
(51) Int. Cl.: G02C 5/22, G02C 7/08, G02C 11/00

(54) **MONTURE ÉLECTRONIQUE**
ELEKTRONISCHE FASSUNG
ELECTRONIC FRAME

(30) Priorité: 24.09.2015 EP 15306487
(43) Date de publication de la demande: 01.08.2018
(73) Titulaire: Essilor International, 94220 Charenton-le-Pont (FR)
(72) Inventeur: JOUARD, Ludovic, 94227 Charenton Le Pont Cedex (FR); PATIN, Eric, 73400 Ugine (FR)
(74) Mandataire: Plasseraud IP
(86) Numéro de dépôt international: PCT/FR2016/052244
(87) Numéro de publication internationale: WO 2017/051092

(56) Documents cités:
- WO-A1-01/35159
- WO-A1-97/35085
- WO-A2-2013/188805
- FR-A- 1 180 905
- US-A1- 2008 013 041

## Description

L'invention concerne une monture électronique.

Il peut s'agir à titre d'exemple non limitatif d'une monture comportant des composants électroniques avec des verres de contact usuels, des verres de type cellule ophtalmique à amplitude variable commandée par un circuit électronique, ou bien encore avec de simples verres, teintés ou non.

Il peut également s'agir d'une monture comportant des composants électroniques et un seul verre, en forme de masque par exemple, apte à être placé devant les deux yeux du porteur de la monture électronique.

Une telle monture électronique comporte usuellement un élément de face destiné à loger au moins un verre, et deux branches présentant chacune une extrémité reliée audit élément de face par une charnière présentant un axe de charnière définissant une direction axiale, ladite monture comportant un conducteur, apte à se courber, qui s'étend entre l'élément de face et l'une au moins desdites branches au voisinage de ladite charnière.

On comprendra par « conducteur » tout élément permettant de transmettre des informations ou de l'énergie, par exemple par énergie électrique de faible intensité. De tels éléments sont par exemples des fils électriques, des câbles, des bandes flexibles portant une couche de matériau conducteur etc...

De nombreuses solutions techniques existent pour faire passer un tel conducteur au travers d'une charnière notamment dans le domaine de la téléphonique (téléphone à clapet) ou lunettes électroniques. Des montures électroniques sont divulguées dans les documents WO97/35085, WO01/35159 et US2008/013041.

Les solutions apportées restent toutefois insatisfaisantes pour être appliquées aux montures électroniques car ces solutions sont coûteuses, ou inesthétiques, ou tout simplement peu compatibles avec la réalisation de montures électronique car la durée de vie de ces solutions techniques serait limitée, ou bien ces solutions techniques présenteraient des contraintes de mise en oeuvre. De plus ces solutions ne sont généralement pas compatibles avec le besoin de réaliser la transmission par un conducteur dans un encombrement limité.

L'invention permet de résoudre cette contrainte tout en permettant de conserver un esthétisme de monture de lunette classique, tout en assurant une protection du conducteur.

Elle propose à cet effet une monture électronique comme définie dans la revendication indépendante 1. La monture électronique conforme à l'invention est remarquable en ce qu'elle comporte au moins un corps placé entre l'élément de face et une extrémité de ladite au moins une branche, ledit corps étant monté mobile dans ladite monture électronique et présentant une ouverture traversante apte à livrer passage audit conducteur.

Le corps traversé par le conducteur permet de le protéger : en effet, le corps empêche tout contact du conducteur avec un corps étranger qui pourrait le détériorer. Le corps cache également le conducteur ce qui permet de garantir l'esthétisme de la charnière, et par conséquent de la monture électronique.

L'invention comporte les caractéristiques suivantes, dont certaines sont optionnelles prises séparément ou en combinaison :
- ledit corps est monté mobile en rotation autour de l'axe de charnière, l'axe de charnière définissant une direction axiale, et l'ouverture traversante étant ménagée dans un plan radial perpendiculaire à la direction axiale,
- ladite extrémité de l'une au moins des deux dites branches peut présenter une zone de guidage du conducteur et une première portion d'accueil d'une partie dudit corps, ladite première portion d'accueil présentant une forme permettant de guider en rotation ledit corps,
- l'élément de face peut comporter, au voisinage de la charnière, une zone de guidage du conducteur et une seconde portion d'accueil d'une partie dudit corps, ladite seconde portion d'accueil présentant une forme permettant de guider en rotation ledit corps,
- la charnière assurant une mobilité de la branche entre une position ouverte et une position fermée, lesdites portions d'accueil peuvent masquer le conducteur et l'ouverture dudit corps suivant n'importe quelle position de ladite branche entre ladite position ouverte et ladite position fermée et dans lesdites positions ouverte et fermée de ladite branche,
- ledit corps est de forme cylindrique,
- les première et seconde portions d'accueil peuvent être des portions au moins partiellement cylindriques,
- ladite ouverture traversante peut présenter une forme permettant de contraindre un rayon de courbure minimal du conducteur,
- ladite forme de ladite ouverture peut être une forme de demi-sablier, ladite ouverture présentant une section qui est croissante entre un centre du corps vers deux extrémités de l'ouverture traversante du corps,
- ladite forme de ladite ouverture peut être une forme de sablier, ladite ouverture présentant une section qui est croissante entre un centre du corps vers deux extrémités de l'ouverture traversante du corps,
- la monture peut présenter une première longueur entre une extrémité de l'élément de face au voisinage de la charnière et une extrémité de ladite branche, le conducteur peut présenter une seconde longueur entre ladite extrémité de l'élément de face et ladite extrémité de ladite branche, et en ce que ladite seconde longueur est sensiblement de 1 à 5% plus grande que ladite première longueur,
- la charnière peut assurer une mobilité de la branche entre une position ouverte et une position fermée, ladite ouverture traversante peut comporter deux parois internes qui se font face et, suivant ladite position ouverte ou fermée de la branche, le conducteur peut être en contact avec l'une ou l'autre des deux dites parois internes de ladite ouverture,
- la charnière peut assurer une mobilité de la branche entre une position ouverte et une position fermée et, entre ladite position ouverte et ladite position fermée, ledit corps n'exerce pas de traction sur ledit conducteur.
- ledit corps comporte des premiers éléments butoirs aptes à rentrer en contact avec des seconds éléments butoirs dont est pourvue ladite extrémité de l'une au moins des deux dites branches et/ou une extrémité dudit élément de face, lesdits second et premier éléments butoirs assurant la rotation dudit corps autour dudit axe de la charnière,
- ladite charnière peut lier l'extrémité de l'une au moins des deux dites branches audit élément de face et ledit corps peut être distinct de ladite charnière,
- suivant une variante de réalisation, ledit corps peut être une partie de la charnière liant l'extrémité de l'une au moins des deux dites branches audit élément de face,
- la charnière peut présenter un angle d'ouverture compris entre sensiblement -10 ° et + 90 °,
- le conducteur peut présenter un rayon de courbure supérieur à 2,5 mm,
- le corps peut présenter une section présentant une longueur sensiblement de 4 mm, ladite longueur étant prise entre les deux points les plus écartés de la section, et le corps peut présenter une hauteur de sensiblement 4 mm.

Pour pouvoir être exécutée, l'invention est exposée de façon suffisamment claire et complète dans la description suivante qui est, en plus, accompagnée de dessins dans lesquels :
- La figure 1 est une vue en coupe schématique d'une extrémité de branche et d'une extrémité d'un élément de face d'une monture électronique suivant un premier exemple de réalisation qui n'est pas conforme à l'invention, un corps mobile étant positionné entre lesdites extrémités, l'ensemble étant montré en position ouverte de la branche,
- La figure 2 est une vue en coupe schématique, montrant l'extrémité de branche, l'extrémité de l'élément de face et le corps mobile de la figure 1, l'ensemble étant montré en position fermée de la branche,
- La figure 3 est une vue en coupe schématique et éclatée, montrant une extrémité de branche, une extrémité de l'élément de face et un corps mobile, différent de celui montré sur les figures 1 et 2,
- La figure 4 est une vue en coupe schématique d'une extrémité de branche et d'une extrémité d'un élément de face d'une monture électronique suivant un second exemple de réalisation qui n'est pas conforme à l'invention, un corps mobile étant positionné entre lesdites extrémités, l'ensemble étant montré en position ouverte et contrainte de la branche,
- La figure 5 est une vue en coupe schématique des extrémités de branche, de l'élément de face et du corps mobile montrés en figure 4, l'ensemble étant montré en position ouverte et non contrainte de la branche,
- La figure 6 est une vue en coupe schématique, montrant l'extrémité de branche, l'extrémité de l'élément de face et le corps mobile de la figure 4, l'ensemble étant montré en position fermée de la branche,
- La figure 7 est une vue en coupe schématique d'une extrémité de branche et d'une extrémité d'un élément de face d'une monture électronique suivant un troisième exemple de réalisation conforme à l'invention, un corps mobile étant positionné entre lesdites extrémités, l'ensemble étant montré en position ouverte de la branche,
- La figure 8 est une vue en coupe schématique des extrémités de branche, de l'élément de face et du corps mobile montrés en figure 7, l'ensemble étant montré en position fermée de la branche,
- La figure 9 est une vue en perspective partielle d'une monture électronique conforme à l'invention,
- Et la figure 10 est un agrandissement de la vue en perspective partielle et en transparence partielle de la monture électronique illustrée en figure 9.

Par souci de clarté, seuls les éléments utiles à la compréhension des modes de réalisation décrits ont été représentés.

De plus, les références désignant un même élément d'un mode de réalisation à un autre seront conservées.

Enfin, dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

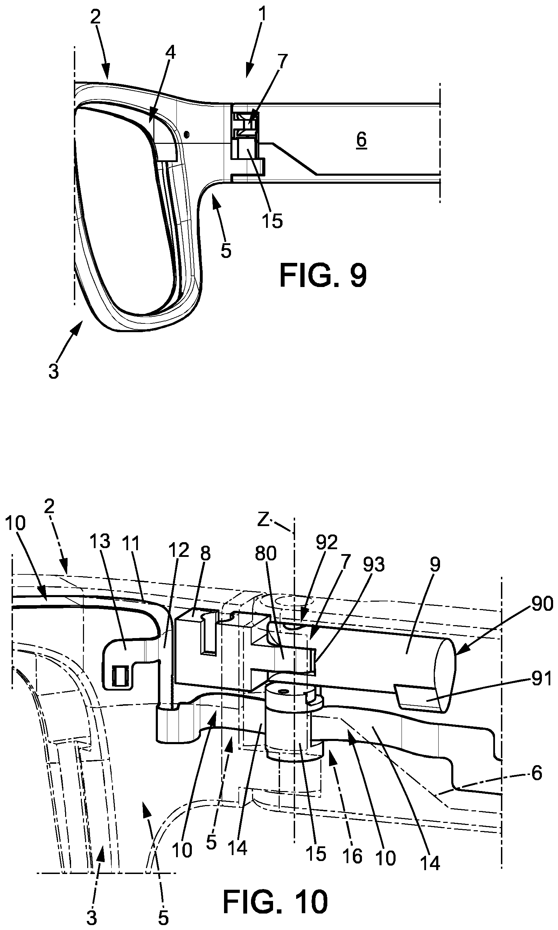

Les figures 9 et 10 illustrent partiellement une monture électronique 1 conforme à l'invention, qui comporte un élément de face 2, c'est-à-dire un élément de la monture qui est apte à se positionner devant le visage d'un porteur de la monture électronique 1.

L'élément de face 2 est conçu pour loger au moins un verre (non montré). Il comporte pour cela un cadre 3 présentant au moins une rainure interne 4 apte à recevoir un bord d'un verre.

Dans l'exemple illustré sur les figures, la monture électronique 1 est conçue pour accueillir deux verres, (même si un seul cadre 3 est illustré), mais il devra être entendu que l'invention n'est pas limitée à une monture électronique 1 conçue pour accueillir deux verres. En effet, la monture électronique conforme à l'invention pourrait être conçue pour n'accueillir qu'un seul verre en forme de masque, sans sortir du cadre de l'invention, le verre en forme de masque étant suffisamment étendu pour s'étendre devant les deux yeux d'un porteur lorsque la monture électronique est portée.

Les verres peuvent être des verres actifs.. On comprendra par verre actif un verre qui est associé à un composant électronique permettant de le faire changer d'état lorsque le composant électronique est activé.

Par exemple, les verres actifs peuvent être des cellules ophtalmiques à amplitude variable commandées par un circuit électronique, ou des verres à modulation de phase ou des verres informatifs.

Il devra être entendu que l'invention n'est pas limitée à un dispositif optique comportant une monture électronique équipée de verres actifs. En effet, un dispositif comportant une monture électronique conforme à l'invention peut être équipé de verres passifs, c'est-à-dire de verres qui peuvent présenter des propriétés optiques (ou non) mais qui ne sont pas conçus pour changer d'état (sous commande d'un composant électronique, par exemple).

Par exemple, il peut être envisagé d'utiliser de verres passifs, et dans ce cas le conducteur peut être utilisé pour relier des composants d'au moins une des branches à des composants logés dans l'élément de face.

Suivant encore un autre mode de réalisation, le conducteur pourrait relier des composants logés dans une branche à des composants logés dans l'autre branche en passant par l'élément de face.

L'élément de face 2 est relié, par ses extrémités latérales 5, à deux branches 6, les deux branches 6 étant conçues pour être positionnées au-dessus des oreilles d'un porteur de la monture.

Une charnière 7 relie chaque branche 6 à une extrémité latérale de l'élément de face.

La charnière 7 assure une mobilité de la branche 6 entre :
- une position ouverte (montrée en figures 9 et 10) suivant laquelle la branche 6 est écartée de l'élément de face 2 et s'étend suivant un plan sensiblement perpendiculaire au plan suivant lequel s'étend l'élément de face,
- et une position fermée suivant laquelle la branche 6 est rapprochée de l'élément de face 2 et s'étend suivant un plan sensiblement parallèle au plan suivant lequel s'étend l'élément de face.

La charnière 7 est plus particulièrement représentée en figure 10.

Elle comporte une base 8, fixée dans le cadre 3 de l'élément de face 2, à l'extrémité latérale 5. La base 8 est de forme sensiblement parallélépipédique, comportant quatre faces latérales, une face supérieure et une face inférieure. La base 8 présente, sur l'une de ses faces latérales, une saillie 80 dont la longueur est sensiblement égale à la longueur de la base 8 de la charnière.

La saillie 80 est sensiblement de section rectangulaire est permet de relier la base 8 de la charnière à un bras 9 de charnière 7.

Le bras 9 de charnière 7 est fixé dans la branche 6.

Le bras 9 de charnière 7 présente un forme générale cylindrique, comprenant une première extrémité 90 dotée d'une saillie radiale 91 et une seconde extrémité 92 présentant une encoche axiale 93 apte à recevoir au moins partiellement la saillie 80 de la base 8 de la charnière.

La saillie 80 et la seconde extrémité 92 du bras 9 comporte chacune une ouverture traversante. Les ouvertures traversantes sont positionnées l'une au-dessus de l'autre, de façon coaxiale, de sorte à pouvoir y introduire une pièce de retenue (rivet par exemple) et assembler ainsi la saillie 80 et l'extrémité 92 du bras 9 de la charnière.

Le bras 9 de la charnière 7 est monté mobile en rotation autour de la pièce de retenue (pivot), et la charnière 7 présente un axe de rotation Z qui correspond à l'axe de la pièce de retenue autour de laquelle le bras 9 peut pivoter.

Conformément à l'invention, la monture 1 électronique comporte au moins un composant électronique.

Dans le cas du présent exemple, elle comporte au moins trois composants électroniques : un premier composant (non représenté) est fixé dans l'élément de face 2, un seconde composant (non représenté) est fixé dans la branche 6 et un troisième composant, qui est un conducteur 10, et qui permet de relier physiquement le premier composant et le second composant.

Comme indiqué ci-avant, le conducteur assure le passage d'un courant-entre le premier composant et le second composant.

Le conducteur 10 est illustré en particulier sur la figure 10. Il est réalisé sous la forme d'un ruban flexible (donc, apte à se courber) portant un circuit conducteur, du type circuit imprimé, permettant de relier les composants avec lesquels le circuit est en contact.

Bien que l'invention décrite et illustrée mette en oeuvre un ruban conducteur 10, il devra être compris que l'invention n'est pas limitée à sa présence.

En effet, le conducteur pourrait être différent : il pourrait s'agir d'un câble, d'un fil, d'une fibre optique ou tout autre élément permettant de transmettre des informations ou de l'énergie entre deux composants électroniques en les reliant physiquement, l'un étant situé dans l'élément de face et l'autre étant situé dans la branche de la monture électronique 1.

Le ruban conducteur 10 comporte une première partie 11 qui s'étend dans l'élément de face 2, jusqu'à l'extrémité latérale 5 de l'élément de face.

Au niveau de l'extrémité latérale 5, la première partie 11 du ruban 10 se courbe pour rejoindre une seconde partie de ruban 12. La seconde partie de ruban comporte un bras de ruban 13, permettant de le relier à un composant électronique (non montré).

L'extrémité de la seconde partie de ruban 12 se courbe à nouveau pour rejoindre une troisième partie de ruban 14, qui se présente parallèlement à la branche 6. La troisième partie de ruban 14 est orientée de sorte que son épaisseur soit positionnée dans l'épaisseur de la branche 6.

Le ruban conducteur 10 s'étend, de cette manière, entre l'élément de face 2 de la monture et une branche 6 de la monture.

Le ruban conducteur 10 est positionné au voisinage de la charnière, sous la charnière 7.

Le ruban conducteur 10 traverse un corps 15 positionné sous la charnière, entre l'extrémité latérale 5 de l'élément de face 2 et l'extrémité de la branche 6.

Ainsi, dans cet exemple de réalisation, le corps 15 est réalisé distinctement de la charnière 7. Il devra toutefois être entendu que l'invention pourrait également concerner un mode de réalisation suivant lequel la charnière comporterait le corps 15 (autrement dit, un mode de réalisation suivant lequel corps 15 appartiendrait à la charnière).

Le corps 15 peut être réalisé dans un matériau présentant des coefficients de frottement faible avec les matériaux dont sont réalisés l'élément de face ou la branche 6. Par exemple, le corps 15 peut être réalisé en Téflon^{®}, en Delrin^{®}, en Bronze...

Le corps 15 a pour fonction de protéger le ruban conducteur 10 en le maintenant à distance de la charnière 7, de le guider entre l'élément de face 2 et l'extrémité de la branche 6 et de cacher le ruban conducteur 10 de l'extérieur de la monture électronique 2 pour le protéger physiquement et pour des raisons esthétiques.

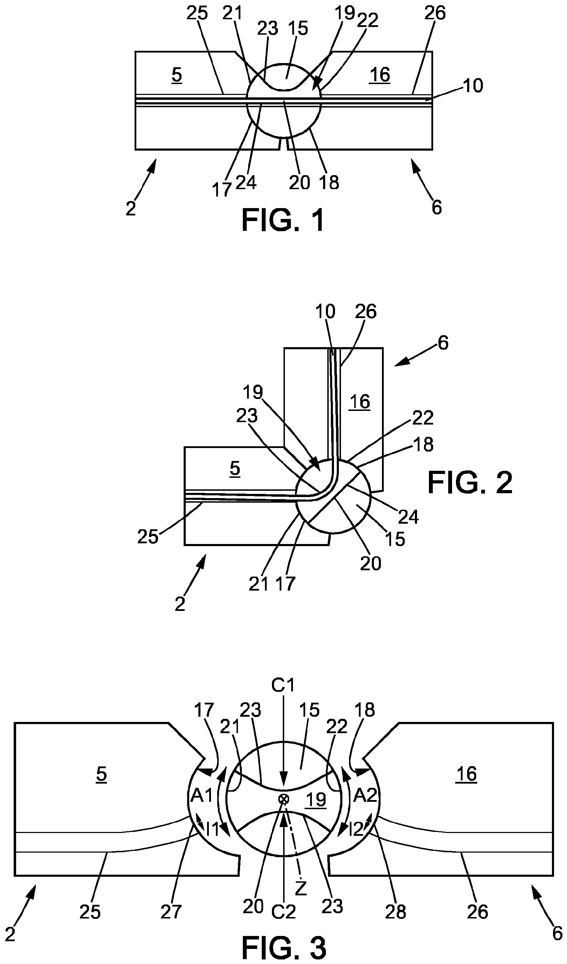

Il va maintenant être fait référence aux figures 1 à 8 pour décrire le corps 15.

Le corps 15 est un cylindre, présentant une section dont la longueur est sensiblement de 4 mm et une hauteur de sensiblement 4 mm.

Le corps 15 est placé dans la monture de telle sorte que son axe coïncide avec l'axe Z de la charnière et il est monté mobile en rotation autour de son axe.

Pour permettre cette rotation, les extrémités 5 et 16, respectivement de l'élément de face 5 et de la branche 6, présentent des portions d'accueil (ou logements) 17 et 18, respectivement, apte à loger chacun une partie du corps 15.

Les deux portions d'accueil 17 et 18 sont conçues pour permettre de guider en rotation le corps 15.

Pour ce faire, les portions d'accueil 17 et 18 présentent chacune une forme partiellement cylindrique complémentaire de la forme du corps 15.

Le corps 15 présente une ouverte traversante 19, apte à livrer passage au ruban conducteur 10.

Pour ce faire, l'ouverture traversante 19 est réalisée dans un plan radial qui est perpendiculaire à la direction axiale suivant laquelle l'axe du corps cylindrique 15 est orienté. L'ouverture traversante permet ainsi d'utiliser un conducteur qui s'étend préférentiellement dans un plan globalement perpendiculaire à la direction axiale. En particulier, préférentiellement, le conducteur ne comporte pas de pliure ou de changement brusque de direction le long de cette ouverture suivant une direction axiale.

L'ouverture traversante 19 présente une forme bien particulière, qui permet de contraindre un rayon de courbure minimal du ruban conducteur 10.

Dans le premier mode de réalisation illustré sur les figures 1 et 2, l'ouverture traversante 19 présente une forme de demi sablier : l'ouverture présente une section croissante entre un centre 20 du corps 15 et deux extrémités 21 et 22 de l'ouverture traversante 19.

L'ouverture traversante 19 présente deux parois internes qui se font face 23 et 24.

La paroi 24 est plane tandis que la paroi 23 est courbe.

Dans le second mode de réalisation illustré sur les figures 3 à 8, l'ouverture traversante 19 présente une forme de sablier et les deux parois internes, qui se font face, sont deux parois courbes 23, réalisées symétriques par rapport à un plan médian du corps 15.

La forme en sablier signifie que la seconde ouverture traversante 19 présente une section qui grandit du centre 20 du corps 15 aux deux extrémités 21 et 22 de l'ouverture traversante 19.

La figure 3 montre un agrandissement du corps 15. Les extrémités 21 et 22 de l'ouverture traversante 19 présentent des angles d'ouverture A1 et A2.

Par ailleurs, les parois courbes 23 présentent une convexité interne C1 et C2 plus ou moins prononcée.

Chaque extrémité 5 et 16, respectivement de l'élément de face 2 et de la branche 6, présente un conduit de guidage 25 et 26, à travers chacun desquels une partie du ruban conducteur 10 est guidée.

Les conduits de guidage 25 et 26 présentent des extrémités ouvertes 27 et 28, respectivement, qui débouchent dans les portions d'accueil 17 et 28, respectivement, des extrémités 5 et 16 de l'élément de face 2 et de la branche 6. Les conduits 25 et 26 sont ici représentés de largeur constante, mais pourraient aussi bien être évasés. Il importe que quelque soit la position d'ouverture de la charnière, les paramètres I1,I2,A1,A2 soient dimensionnés tels qu'il existe toujours une zone de recouvrement entre les extrémités 27 et 21 d'une part, et les extrémités 28 et 22 d'autres part.

Les conduits de guidage 25 et 26 définissent des zones de guidage du ruban conducteur 10 à un endroit donné des portions d'accueil 17 et 18. Les zones de guidage s'étendent sur une largeur I1 et I2, respectivement sur les portions d'accueil 17 et 18 des extrémités 5 et 16 de l'élément de face 2 et de la branche 6.

L'ajustement des paramètres A1, A2, I1, I2 et C1, C2, notamment, permet d'influencer l'une au moins des caractéristiques suivantes de la monture électronique 1 :
- le rayon de courbure du ruban conducteur 10,
- la longueur du chemin traversé par le ruban conducteur 10 entre les extrémités 27 et 28 (de cette longueur dépend la traction ou la compression du ruban conducteur),
- le blocage du ruban conducteur 10 de part et d'autre de la charnière 7 pour réaliser une étanchéité,
- l'angle d'ouverture de la branche 6.

On peut ainsi réaliser une monture électronique de sorte que les portions d'accueil 17 et 18 masquent le ruban conducteur 10 et les extrémités 21 et 22 de l'ouverture traversante 19 suivant n'importe quelle position prise par la branche 6 entre sa position ouverte et sa position fermée, ainsi que suivant la position ouverte ou la position fermée de la branche 6.

On peut également prévoir des paramètres A1, A2, I1, I2 et C1, C2 tels que, entre la position ouverte et la position fermée de la branche (ou inversement), le corps 15 n'exerce pas de traction sur le ruban conducteur 10.

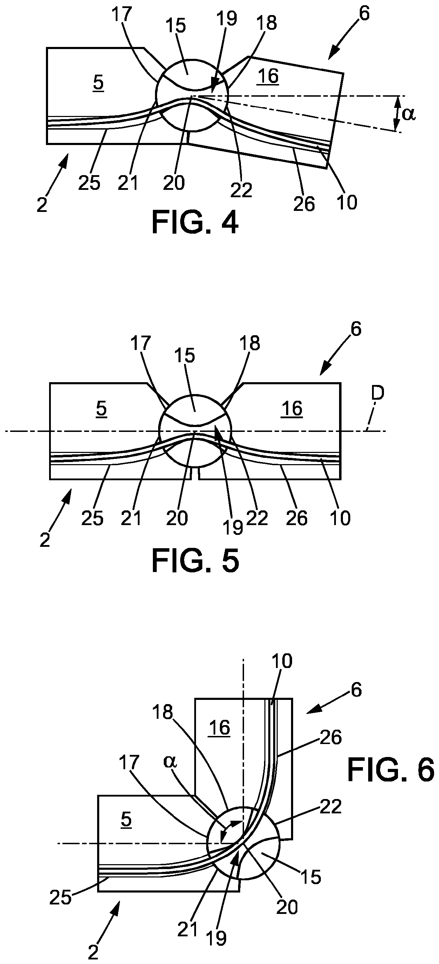

Les figures 4 à 6 illustrent trois positions prises par la branche 6 et permises par un réglage des paramètres A2, I1, I2 et C1, C2.

La figure 4 montre la branche 6 en position ouverte et contrainte par rapport à l'élément de face 2 : il s'agit de la position prise par la branche 6 quand un porteur écarte les branches 6 d'une monture pour positionner la face de la monture électronique devant son visage et placer les branches 6 au-dessus de ses oreilles. La position est dite « contrainte » car elle est imposée par une force exercée par le porteur pour écarter les branches 6.

L'angle α pris par la branche 6 en position ouverte et contrainte est de -10 ° par rapport à la position ouverte et non contrainte de la branche 6.

La position ouverte et non contrainte de la branche 6 est illustrée en figure 5. On notera que, suivant cette position, l'extrémité 5 de l'élément de face 2 et l'extrémité 16 de la branche 6 sont alignées suivant une droite D.

La position fermée de la branche 6 est illustrée en figure 6 : il s'agit de la position prise par la branche 6 quand le porteur rabat la branche 6 contre l'élément de face, quand il ne porte pas la monture électronique et souhaite la ranger dans un étui, par exemple.

L'angle α entre la direction prise par la branche 6 et la direction D de l'élément de face est sensiblement de 90°.

On constate ainsi que la charnière présente un angle d'ouverture compris sensiblement entre -10° et 90°.

Au regard des dimensions du corps 15 (évoquées ci-avant), le ruban conducteur 10 doit présenter un rayon de courbure supérieur à 2,5 mm pour ne pas être contraint, et ce dans n'importe quelle position prise par la branche 6.

De façon plus générale, on considère une longueur de chemin sur laquelle s'étale le ruban conducteur 10 entre les extrémités 5 et 16 de l'élément de face 2 et de la branche 6, la longueur de chemin étant prise entre les extrémités 27 et 28 des conduits 25 et 26, respectivement. On prévoit que la longueur du ruban conducteur 10 disposés entre ces deux extrémités 27 et 28 soit sensiblement de 1 à 5 % plus grande que la longueur de chemin pour éviter toute contrainte du ruban conducteur 10.

On notera que, suivant que la branche soit en position ouverte (contrainte ou non) ou en position fermée, le ruban conducteur est en contact avec l'une ou l'autre des parois internes 23 de l'ouverture traversante 19 : en position ouverte (ou écartée) de la branche, montrée en figure 4 ou 5 (illustrant respectivement les positions contrainte et non contrainte) le ruban conducteur 10 est en contact avec une paroi 23 (paroi 23 inférieure sur les figures 4 et 5). En position fermée (ou rapprochée) de la branche 6 (voir la figure 6), le ruban conducteur se positionne contre l'autre paroi 23 de l'ouverture traversante 19 (la paroi interne supérieure sur la figure 6).

Dans les exemples décrits ci-avant, c'est le ruban conducteur 10 qui, prenant appui sur l'une ou l'autre des parois internes de l'ouverture traversante, entraîne le corps en rotation.

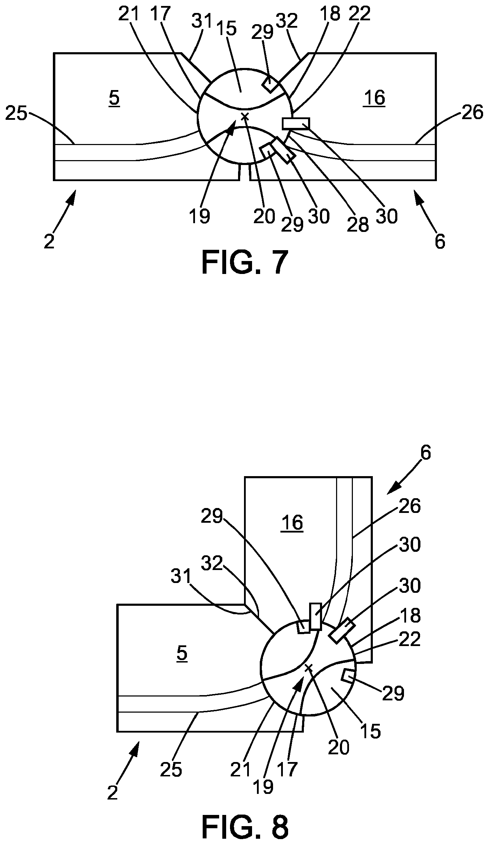

D'accord avec l'invention, les figures 7 et 8 montrent une solution technique suivant laquelle on prévoit de positionner des éléments formant des butés à la fois sur le corps 15 et sur l'une des extrémités de l'élément de face ou de la branche.

Les éléments formant butées servent à entraîner en rotation le corps 15 lors du pivotement de la branche 6.

Dans les exemples illustrés en figures 7 et 8, le corps 15 présente deux butées 29, saillantes sur une surface supérieure ou inférieure du corps cylindrique 15, l'une des butées 29 étant fixée au voisinage de la partie inférieure de l'extrémité 22 de l'ouverture 19, et l'autre des butées 29 étant fixée au voisinage de la partie supérieure de l'extrémité 22 de l'ouverture 19.

L'extrémité 16 de la branche 6 présente également deux butées saillantes 30, situées de part et d'autre de l'extrémité 28 du conduit 26 de la branche 6.

Lors de la fermeture (ou du rapprochement) de la branche 6 par rapport à l'élément de face 2 (figure 8), la butée 30 située en partie supérieure de l'extrémité ouverte 28 se positionne contre la butée supérieure 29 du corps 15. La butée 30 pousse alors sur la butée 29 qui entraîne en rotation le corps 15. La rotation du corps 15 s'arrête quand deux parties 31 et 32 des deux extrémités 5 et 16 des branches viennent en contact l'une avec l'autre.

Lors de l'ouverture (ou de l'écartement) de la branche 6 et de l'élément de face 2 (figure 7), la butée 30 située en partie inférieure de l'extrémité ouverte 28 se positionne contre la butée inférieure 29 du corps 15. La butée 30 pousse alors sur la butée 29 qui entraîne en rotation le corps 15 lors du passage de la branche 6 de sa position fermée (ou rapprochée) à sa position ouverte (ou écartée - voir figure 7).

On comprend de la description qui précède comment l'invention permet de cacher un élément conducteur, type ruban conducteur flexible, au niveau d'une charnière d'une monture électronique.

Il devra toutefois être compris que l'invention n'est pas limitée aux modes de réalisation spécifiquement décrits ci-avant et qu'elle s'étend à la mise en oeuvre comme décrit dans les revendications.

## Revendications

1. Monture électronique (1) comportant un élément de face (2) destiné à loger au moins un verre, et au moins une branche (6) présentant une extrémité (16) reliée audit élément de face (2) par une charnière (7) présentant un axe de charnière (Z), ladite monture électronique (1) comportant un conducteur (10), apte à se courber, qui s'étend entre l'élément de face (2) et ladite au moins une branche (6) au voisinage de ladite charnière (7),
ladite monture comporte au moins un corps (15) placé entre l'élément de face (2) et une extrémité (16) de ladite au moins une branche (6), ledit corps (15) étant monté mobile dans ladite monture électronique (1) et présentant une ouverture traversante (19) apte à livrer passage audit conducteur (10),
et **caractérisé en ce que** ledit corps est de forme sensiblement cylindrique (15) et comporte des premiers éléments butoirs (29) aptes à rentrer en contact avec des seconds éléments butoirs (30) dont est pourvue ladite extrémité (16) de ladite au moins une branche (6), lesdits premier et second éléments butoirs (29, 30) assurant la rotation dudit corps (15) autour dudit axe de charnière (Z),
et **en ce que** les premiers éléments butoirs comprennent deux butées (29), saillantes sur une surface supérieure ou inférieure du corps sensiblement cylindrique (15), l'une des butée (29) étant fixée au voisinage de la partie inférieure de l'extrémité (22) de l'ouverture traversante (19), et l'autre des butées (29) étant fixée au voisinage de la partie supérieure de l'extrémité (22) de l'ouverture traversante (19), et **en ce que** les seconds éléments butoirs comprennent deux butées saillantes (30) situées de part et d'autre de l'extrémité (28) du conduit (26) de la branche (6).

2. Monture électronique (1) selon la revendication 1, **caractérisée en ce que** l'axe de charnière (Z) définit une direction axiale, **en ce que** ledit corps (15) est monté mobile en rotation autour de l'axe de charnière (Z) et **en ce que** ladite ouverture traversante (19) est ménagée dans un plan radial perpendiculaire à la direction axiale.

3. Monture électronique selon la revendication 1 ou 2, **caractérisée en ce que** ladite extrémité (16) de ladite au moins une branche (6) présente une zone de guidage (28) du conducteur et une première portion d'accueil (18) d'une partie dudit corps (15), ladite première portion d'accueil (18) présentant une forme permettant de guider en rotation ledit corps (15).

4. Monture électronique selon la revendication 1, 2 ou 3, **caractérisée en ce que** l'élément de face (2) comporte, au voisinage de la charnière, une zone de guidage (27) du conducteur et une seconde portion d'accueil (17) d'une partie dudit corps (15), ladite seconde portion d'accueil (17) présentant une forme permettant de guider en rotation ledit corps (15).

5. Monture électronique selon les revendications 3 et 4, **caractérisée en ce que** la charnière (7) assure une mobilité de ladite au moins une branche (6) entre une position ouverte et une position fermée, et **en ce que** lesdites portions d'accueil (17, 18) masquent le conducteur (10) et l'ouverture traversante (19) dudit corps (15) suivant n'importe quelle position de ladite au moins une branche (6) entre ladite position ouverte et ladite position fermée et dans lesdites positions ouverte et fermée de ladite au moins une branche.

6. Monture selon l'une quelconque des revendications précédentes, **caractérisée en ce que** ladite ouverture traversante (19) présente une forme permettant de contraindre un rayon de courbure minimal du conducteur (10).

7. Monture selon la revendication 6, **caractérisée en ce que** ladite forme de ladite ouverture (19) est une forme de demi-sablier, ladite ouverture (19) présentant une section qui est croissante entre un centre (20) du corps (15) vers deux extrémités (21, 22) de l'ouverture traversante (19) du corps (15).

8. Monture selon la revendication 6, **caractérisée en ce que** ladite forme de ladite ouverture (19) est une forme de sablier, ladite ouverture (19) présentant une section qui est croissante entre un centre (20) du corps (15) vers deux extrémités (21, 22) de l'ouverture traversante (19) du corps (15).

9. Monture selon l'une quelconque des revendications précédentes, **caractérisée en ce qu'**elle présente une première longueur entre une extrémité (27) de l'élément de face (2) au voisinage de la charnière (7) et une extrémité (28) de ladite branche (6), **en ce que** le conducteur (10) présente une seconde longueur entre ladite extrémité (27) de l'élément de face (2) et ladite extrémité (28) de ladite branche (6), et **en ce que** ladite seconde longueur est sensiblement de 1 à 5% plus grande que ladite première longueur.

10. Monture selon l'une quelconque des revendications précédentes, **caractérisée en ce que** la charnière (7) assure une mobilité de la branche (6) entre une position ouverte et une position fermée, **en ce que** ladite ouverture traversante (19) comporte deux parois internes (23, 24) qui se font face et **en ce que**, suivant ladite position ouverte ou fermée de la branche (6), le conducteur (10) est en contact avec l'une ou l'autre des deux dites parois internes (23, 24) de ladite ouverture traversante (19).

11. Monture selon l'une quelconque des revendications précédentes, **caractérisée en ce que** la charnière (7) assure une mobilité de la branche (6) entre une position ouverte et une position fermée et **en ce que**, entre ladite position ouverte et ladite position fermée, ledit corps (15) n'exerce pas de traction sur ledit conducteur (10).

12. Monture selon l'une quelconque des revendications précédentes, **caractérisée en ce que** ladite charnière (7) lie l'extrémité (16) de ladite au moins une branche (6) audit élément de face (2) et **en ce que** ledit corps (15) est distinct de ladite charnière (7).

13. Monture selon l'une quelconque des revendications précédentes, **caractérisée en ce que** ledit corps (15) est une partie de la charnière liant l'extrémité de ladite au moins une branche audit élément de face.

## Patentansprüche

1. Elektronische Fassung (1), welche ein Vorderseitenelement (2), das dazu bestimmt ist, mindestens ein Glas aufzunehmen, und mindestens einen Bügel (6), der ein Ende (16) aufweist, das mit dem Vorderseitenelement (2) durch ein eine Scharnierachse (Z) aufweisendes Scharnier (7) verbunden ist, umfasst, wobei die elektronische Fassung (1) einen Leiter (10) umfasst, der sich krümmen kann und der sich zwischen dem Vorderseitenelement (2) und dem mindestens einen Bügel (6) in der Nähe des Scharniers (7) erstreckt,
wobei die Fassung mindestens einen Körper (15) umfasst, der zwischen dem Vorderseitenelement (2) und einem Ende (16) des mindestens einen Bügels (6) angeordnet ist, wobei der Körper (15) beweglich in der elektronischen Fassung (1) angebracht ist und eine Durchgangsöffnung (19) aufweist, die für eine Durchführung des Leiters (10) geeignet ist,
**dadurch gekennzeichnet, dass** der Körper von im Wesentlichen zylindrischer Form (15) ist und erste Anschlagelemente (29) aufweist, die geeignet sind, mit zweiten Anschlagelementen (30) in Kontakt zu kommen, mit denen das Ende (16) des mindestens einen Bügels (6) versehen ist, wobei die ersten und zweiten Anschlagelemente (29, 30) die Drehung des Körpers (15) um die Scharnierachse (Z) sicherstellen,
und dadurch, dass die ersten Anschlagelemente zwei Anschläge (29) umfassen, die auf einer Oberseite oder Unterseite des im Wesentlichen zylindrischen Körpers (15) vorstehen, wobei einer der Anschläge (29) in der Nähe des unteren Teils des Endes (22) der Durchgangsöffnung (19) befestigt ist und der andere der Anschläge (29) in der Nähe des oberen Teils des Endes (22) der Durchgangsöffnung (19) befestigt ist,
und dadurch, dass die zweiten Anschlagelemente zwei vorstehende Anschläge (30) umfassen, die sich beiderseits des Endes (28) des Kanals (26) des Bügels (6) befinden.

2. Elektronische Fassung (1) nach Anspruch 1, **dadurch gekennzeichnet, dass** die Scharnierachse (Z) eine axiale Richtung definiert, dadurch, dass der Körper (15) drehbeweglich um die Scharnierachse (Z) angebracht ist, und dadurch, dass die Durchgangsöffnung (19) in einer radialen Ebene ausgebildet ist, die zu der axialen Richtung senkrecht ist.

3. Elektronische Fassung nach Anspruch 1 oder 2, **dadurch gekennzeichnet, dass** das Ende (16) des mindestens einen Bügels (6) einen Führungsbereich (28) für den Leiter und einen ersten Aufnahmeabschnitt (18) für einen Teil des Körpers (15) aufweist, wobei der erste Aufnahmeabschnitt (18) eine Form aufweist, welche ermöglicht, den Körper (15) bei der Drehung zu führen.

4. Elektronische Fassung nach Anspruch 1, 2 oder 3, **dadurch gekennzeichnet, dass** das Vorderseitenelement (2) in der Nähe des Scharniers einen Führungsbereich (27) für den Leiter und einen zweiten Aufnahmeabschnitt (17) für einen Teil des Körpers (15) aufweist, wobei der zweite Aufnahmeabschnitt (17) eine Form aufweist, die es ermöglicht, den Körper (15) bei der Drehung zu führen.

5. Elektronische Fassung nach den Ansprüchen 3 und 4, **dadurch gekennzeichnet, dass** das Scharnier (7) eine Beweglichkeit des mindestens einen Bügels (6) zwischen einer geöffneten Position und einer geschlossenen Position sicherstellt, und dadurch, dass die Aufnahmeabschnitte (17, 18) den Leiter (10) und die Durchgangsöffnung (19) des Körpers (15) bei jeder beliebigen Position des mindestens einen Bügels (6) zwischen der geöffneten Position und der geschlossenen Position sowie in der geöffneten und der geschlossenen Position des mindestens einen Bügels verdecken.

6. Fassung nach einem der vorhergehenden Ansprüche, **dadurch gekennzeichnet, dass** die Durchgangsöffnung (19) eine Form aufweist, die es ermöglicht, einen minimalen Krümmungsradius des Leiters (10) zu erzwingen.

7. Fassung nach Anspruch 6, **dadurch gekennzeichnet, dass** die Form der Öffnung (19) eine Form einer Sanduhrhälfte ist, wobei die Öffnung (19) einen Querschnitt aufweist, welcher von einem Mittelpunkt (20) des Körpers (15) aus in Richtung zweier Enden (21, 22) der Durchgangsöffnung (19) des Körpers (15) zunimmt.

8. Fassung nach Anspruch 6, **dadurch gekennzeichnet, dass** die Form der Öffnung (19) eine Sanduhrform ist, wobei die Öffnung (19) einen Querschnitt aufweist, welcher von einem Mittelpunkt (20) des Körpers (15) aus in Richtung zweier Enden (21, 22) der Durchgangsöffnung (19) des Körpers (15) zunimmt.

9. Fassung nach einem der vorhergehenden Ansprüche, **dadurch gekennzeichnet, dass** sie eine erste Länge zwischen einem Ende (27) des Vorderseitenelements (2) in der Nähe des Scharniers (7) und einem Ende (28) des Bügels (6) aufweist, dadurch, dass der Leiter (10) eine zweite Länge zwischen dem Ende (27) des Vorderseitenelements (2) und dem Ende (28) des Bügels (6) aufweist, und dadurch, dass die zweite Länge um ungefähr 1 bis 5 % größer als die erste Länge ist.

10. Fassung nach einem der vorhergehenden Ansprüche, **dadurch gekennzeichnet, dass** das Scharnier (7) eine Beweglichkeit des Bügels (6) zwischen einer geöffneten Position und einer geschlossenen Position sicherstellt, dadurch, dass die Durchgangsöffnung (19) zwei Innenwände (23, 24) umfasst, die einander zugewandt sind, und dadurch, dass je nachdem, ob sich der Bügel (6) in der geöffneten oder geschlossenen Position befindet, der Leiter (10) sich mit der einen oder anderen der zwei Innenwände (23, 24) der Durchgangsöffnung (19) in Kontakt befindet.

11. Fassung nach einem der vorhergehenden Ansprüche, **dadurch gekennzeichnet, dass** das Scharnier (7) eine Beweglichkeit des Bügels (6) zwischen einer geöffneten Position und einer geschlossenen Position sicherstellt, dadurch, dass zwischen der geöffneten Position und der geschlossenen Position der Körper (15) keine Zugkraft auf den Leiter (10) ausübt.

12. Fassung nach einem der vorhergehenden Ansprüche, **dadurch gekennzeichnet, dass** das Scharnier (7) das Ende (16) des mindestens einen Bügels (6) mit dem Vorderseitenelement (2) verbindet, und dadurch, dass der Körper (15) von dem Scharnier (7) verschieden ist.

13. Fassung nach einem der vorhergehenden Ansprüche, **dadurch gekennzeichnet, dass** der Körper (15) ein Teil des Scharniers ist, welches das Ende des mindestens einen Bügels mit dem Vorderseitenelement verbindet.

## Claims

1. Electronic frame (1) including a front element (2) intended to house at least one lens, and at least one temple (6) having an end (16) joined to said front element (2) by a hinge (7) having a hinge axis (Z), said electronic frame (1) including a conductor (10), which is able to curve, that extends between the front element (2) and said at least one temple (6) in the vicinity of said hinge (7),
said frame includes at least one body (15) placed between the front element (2) and one end (16) of said at least one temple (6), said body (15) being movably mounted in said electronic frame (1) and having a through aperture (19) apt to let said conductor (10) pass,
and **characterized in that** said body is of substantially cylindrical shape (15) and includes first stopping elements (29) able to make contact with second stopping elements (30) with which said end (16) of said at least one temple (6) is provided, said first and second stopping elements (29, 30) ensuring the rotation of said body (15) about said hinge axis (Z),
and **in that** the first stopping elements comprise two stops (29), protruding from an upper or lower surface of the substantially cylindrical body (15), one of the stops (29) being located in the vicinity of the lower portion of the end (22) of the through aperture (19), and the other of the stops (29) being located in the vicinity of the upper portion of the end (22) of the through aperture (19),
and **in that** the second stopping elements comprise two protruding stops (30), located on either side of the end (28) of the duct (26) of the temple (6).

2. Electronic frame (1) according to Claim 1, **characterized in that** the hinge axis (Z) defines an axial direction, **in that** said body (15) is movably mounted so as to be able to rotate about the hinge axis (2) and **in that** said through aperture (19) is in a radial plane perpendicular to the axial direction.

3. Electronic frame according to Claim 1 or 2, **characterized in that** said end (16) of said at least one temple (6) has a zone (28) for guiding the conductor, and a first section (18) for receiving a portion of said body (15), said first receiving section (18) having a shape allowing said body (15) to be guided in rotation.

4. Electronic frame according to Claim 1, 2 or 3, **characterized in that** the front element (2) includes, in the vicinity of the hinge, a zone (27) for guiding the conductor, and a second section (17) for receiving a portion of said body (15), said second receiving section (17) having a shape allowing said body (15) to be guided in rotation.

5. Electronic frame according to Claims 3 and 4, **characterized in that** the hinge (7) allows said at least one temple (6) to move between an open position and a closed position, and **in that** said receiving sections (17, 18) mask the conductor (10) and the through aperture (19) of said body (15) in any position of said at least one temple (6) between said open position and said closed position and in said open and closed positions of said at least one temple.

6. Frame according to any one of the preceding claims, **characterized in that** said through aperture (19) has a shape allowing a minimum radius of curvature of the conductor (10) to be constrained.

7. Frame according to Claim 6, **characterized in that** said shape of said aperture (19) is a half-hourglass shape, said aperture (19) having a cross section that increases from a centre (20) of the body (15) to two ends (21, 22) of the through aperture (19) of the body (15).

8. Frame according to Claim 6, **characterized in that** said shape of said aperture (19) is an hourglass shape, said aperture (19) having a cross section that increases from a centre (20) of the body (15) to two ends (21, 22) of the through aperture (19) of the body (15).

9. Frame according to any one of the preceding claims, **characterized in that** it has a first length between one end (27) of the front element (2) in the vicinity of the hinge (7) and one end (28) of said temple (6), **in that** the conductor (10) has a second length between said end (27) of the front element (2) and said end (28) of said temple (6), and **in that** said second length is substantially 1 to 5% larger than said first length.

10. Frame according to any one of the preceding claims, **characterized in that** the hinge (7) allows the temple (6) to move between an open position and a closed position, **in that** said through aperture (19) includes two internal walls (23, 24) that face each other and **in that**, in said open or closed position of the temple (6), the conductor (10) makes contact with one or other of said two internal walls (23, 24) of said through aperture (19).

11. Frame according to any one of the preceding claims, **characterized in that** the hinge (7) allows the temple (6) to move between an open position and a closed position and **in that**, between said open position and said closed position, said body (15) does not exert a tensile stress on said conductor (10).

12. Frame according to any one of the preceding claims, **characterized in that** said hinge (7) links the end (16) of said at least one temple (6) to said front element (2) and **in that** said body (15) is distinct from said hinge (7) .

13. Frame according to any one of the preceding claims, **characterized in that** said body (15) is a portion of the hinge linking the end of said at least one temple to said front element.
